# EUROPEAN PATENT APPLICATION

(11) **EP 1 731 758 A1**
(43) Date of publication of application: **13.12.2006**
(21) Application number: 05727348.4
(22) Date of filing: 30.03.2005
(51) Int. Cl.: F03D 11/00, F03D 3/06, F03D 7/06

(54) **VERTICAL SHAFT TYPE WINDMILL AND BLADE FOR WINDMILL**

(30) Priority: 31.03.2004 JP 2004105918
(71) Applicant: Intellectual Property Bank Corp., Tokyo 105-0001 (JP)
(72) Inventor: YOKOI, Tadashi, 2610011 (JP)
(74) Representative: Rees, Alexander Ellison
(86) International application number: PCT/JP2005/006096
(87) International publication number: WO 2005/095793

(57) **Abstract**

It is an object of the invention is to provide a vertical axis wind turbine and a wind turbine blade, which are excellent in self-starting performance and have a high torque constant.

Since the present invention comprises a wind receiving plate 40 having a wind receiving surface and an openable and closable pivot 42, which wind receiving plate 40 is operated to close in the direction in which the centrifugal force is produced in proportion to the revolution of a blade 18 generating a lifting power, and an energizing means (such as spring 44) for energizing an opening force to open the wind receiving plate to the wind receiving side, the starting performance of the lift type wind turbine can be improved by means of the wind receiving plate 40, which opens at a low revolution of the blade 18 so as to function as a drag type wind turbine, and automatically closes at a high revolution of the blade 18 so as to function as a lift type wind turbine.

## Description

### TECHNICAL FIELD

This invention relates to a starting mechanism for a lift type wind turbine.

### BACKGROUND ART

A straight-wing type vertical axis wind turbine is a wind turbine, which operates in principle in the energy-efficient form of a lifting power similarly to a horizontal-axis propeller type wind turbine and a Darius-type wind turbine, but the wind turbine of this type has some advantages suitable to a small wind power generator capable of generating a rated output of 100 W to several tens kW depending on its shape. Meanwhile, it suffers from the disadvantage of inferior self-starting capability in a slight wind of about 1 to 3 m/s.

As a wind turbine excellent in self-starting capability, there has been a wind turbine employing a wing utilizing a drag principle as typified by a Sabonius wind turbine, whereas the drag type wind turbine which operates by the pressure of wind is extremely inefficient in conversion efficiency of the energy gained from the wind, consequently resulting in the tendency of low practical value as a power generating device.

Such being the case, there has been proposed various devices for improving the shortcomings in self-starting performance of the conventional straight-wing type vertical axis wind turbine cardinally based on a lifting principle for the purpose of putting the wind turbine into practical use.

Of conventional power generating wind turbines having a plurality of blades arranged at regular angles about its rotational axis in a plane perpendicular to the rotational axis, there has been known the power generating wind turbine featured in that the aforesaid blades are each formed in a wing profile having a lift coefficient in the range of 1.0 to 1.4 and has a cutout on the side of the aforementioned rotational axis with respect to its blade chord, which cutout is formed beginning at a point 35% to 45% of the length of the blade chord away from its front end up to the rear end, so as to make it possible to generate electricity even in a wind of low Reynolds number in the range of 30,000 to 3,000,000. (e.g. Patent Literature 1)

There has been also known a wind turbine featured by a blade comprising support frames, which extend along the upper and lower revolution planes of the wind turbine and pass through the rotational axis of the wind turbine along the wind receiving surface of the wind turbine, Sabonius blades, blades using lifting power, which are supported by the support frames at distant positions from the Sabonius blades, and an electric generator on the rotational axis. (e.g. Patent Literature 2)

Further, there has been known a small wind generating machine comprising a straight-wing turbine mounted on a rotary shaft connected to an electric generator, a starting turbine rotatably mounted on the rotary shaft so as to produce a driving torque even by weak wind, and a connection means intervening between the starting turbine and the straight-wing turbine for transmitting the revolution of the starting turbine to the straight-wing turbine in one direction, wherein the driving torque of the starting turbine at a low-speed revolution is transmitted to the straight-wing turbine through the connection means, and the straight-wing turbine is disconnected from the straight-wing turbine when the revolution rate of the straight-wing turbine exceeds that of the starting turbine. (e.g. Patent Literature 3)

The aforesaid Patent Literature 3 discloses that the machine can complement the self starting force of the straight-wing turbine by the action of the connection means to effectively rotate the straight-wing turbine receiving the driving torque produced by the starting turbine when the machine starts in weak wind, and disconnect the starting turbine by the connection means at the high-speed revolution, thus enabling efficient electric power generation without disturbances in high speed revolution.

Further, there has been known electric power generating equipment comprising an induction generator connected to a wind turbine served as a motor using natural force such as wind, a first AC-DC conversion circuit capable of converting the output from the induction generator to DC electricity in a convertible manner in both forward and reverse directions, a second AC-DC conversion circuit for converting the converted DC electricity to AC electricity to be sent to a load device connected to a prescribed alternator in a convertible manner in both forward and reverse directions, and a command signal recording device having a control function of directly or indirectly controlling the aforementioned AC-DC conversion circuits for recording the command signal for the aforementioned control function specified in correlation with the revolution speed of the aforementioned motor at the time of starting and electricity generation of the aforesaid induction generator. (e.g. Patent Literature 4)

Patent Literature 4 discloses that the electric power generating equipment controls to automatically switch between the functions of the generator and the motor according to the natural force such as wind force, so that the electric power generating equipment can start even in a realm of nature such as in weak wind and continue to be automatically driven to generate electricity.

Further, there has been conventionally known a wind power generator having a vertical axis wind turbine disposed integrally on the upper portion of a rotary shaft rotatably standing around an axial center, an electric generator mounted at the adequate positions of the basal end of the aforementioned rotary shaft so as to generate electricity by the revolution of the rotary shaft, a battery used in combination with an external power source such as solar light so as to charge the battery by means of the electric generator and the external power source, which battery has a function of outputting to external equipment, and an auxiliary motor for continuously giving at least the minimalist revolution required for starting the vertical axis wind turbine to the rotary shaft with supply of the electric power charged to the battery. (e.g. Patent Literature 5)
[Patent Literature 1] Japanese Patent No. 3451085B (Pages 1-3; FIG 1)
[Patent Literature 2] Japanese Patent Application Publication No. 11-294313A (Pages 1-2; FIG 1)
[Patent Literature 3] Japanese Patent Application Publication HEI 11-201020A (Pages 1-3; FIG 2)
[Patent Literature 4] Japanese U.M. Application Publication HEI 6-9400A (Pages 1-2; FIG 1)
[Patent Literature 5] Japanese Patent Application Publication No. 2003-314429A (Pages 1-3; FIG 6)

### DISCLOSURE OF INVENTION

### PROBLEMS TO BE RESOLVED BY THE INVENTION

Patent Literature 1 discloses the power generating wind turbine produce the starting torque by encountering large air resistance exerted on the blade with wind from behind the blade at a low wind velocity as in starting due to the cutout in the lower surface of the blade, thus producing rotating moment on the blade due to the air resistance, i.e. the function of Sabonius wind turbine. Moreover, the rotating moment is produced by air resistance in the low wind velocity areas of circumferential velocity ratio of not exceeding 1. In the high wind velocity areas of circumferential velocity ratio more than 1, the wind turbine rotates with the lifting power exerted on the blade. Since the blade is formed in the shape of a wing so as to have a high lift coefficient at a low Reynolds number, the blade can rotate at any wind velocity, thereby to generate electricity with high efficiency.

Patent Literature 1 discloses the wind turbine can be effectively achieved in the Reynolds number of 30,000 to 3,000,000 or with lift coefficient of 1.0 to 1.4, and more effectively achieved by having the cutout formed beginning at a point 35% to 45% of the length of the blade chord away from its front end up to the rear end.

However, since the invention disclosed in Patent Literature 1 provides a mechanism for producing a rotating moment on the blade with the air resistance caused by the cutout in the lower wing part of the blade at a low wind velocity of a tip-speed ratio of not exceeding 1, only the air resistance on the order of the thickness of the wing can be derived, as the result of which a large torque cannot disadvantageously be produced.

The invention disclosed in Patent Literature 1 employs the wing having the cutout in the lower surface thereof, which is different from an ordinary wing. Because a common lift type wind turbine likely rotates at a speed three times to ten times as fast as the wind velocity, current disturbance increases in the vicinity of the cutout when the circumferential velocity ratio (tip-speed ratio) is high, consequently to decrease the lifting performance of the wing. As a result, the wind turbine has suffered a disadvantage such that its torque constant does not increase so much, thus to generate only small electrical energy even when a strong wind blows.

Furthermore, the cutout formed in its lower surface of the wing also entails a disadvantage such that the torque constant does not increase so much, thus to generate only small electrical energy even when a strong wind blows because of decrease in lifting power in comparison with an ordinary wing, A harmful effect brought about by the disadvantage may be small, but the influence there of is increased at the high wind velocity and high revolution speed, so that high lifting performance and sufficient output performance cannot be expected. Besides, a whirlpool possibly occurs by disturbance of air current under the wing, thus to make noises.

The hybrid power generation method disclosed in Patent Literature 2 comprises two support frames, which extend along the upper and lower revolution planes of the wind turbine and pass through the rotational axis of the wind turbine along the wind receiving surface of the wind turbine around the relatively low Sabonius blades, and lift-based propeller type wings disposed parallel to the rotary shaft at the end portions of the two support frames so as to have curved surfaces facing outward with respect of the turning circle and flat surfaces facing inward. The aforementioned support frames are fixed on the Sabonius wind turbine so as to assume a hybrid type in which the Sabonius wind turbine rotates with the propeller type wings.

However, the invention disclosed in Patent Literature 2 entails a disadvantage of reducing the power generation due to turbulence caused in wind at the time of increase of the wind velocity, which is desired for full-fledged energy recovery, thus impairing the performance of the propeller type wings. Furthermore, the intended structure of the proposed wind turbine having a combination of wings different completely in structure and form is complicated and at a disadvantage in production.

The invention disclosed in Patent Literature 3 necessitates not only the independent starting turbine and the independent straight-wing turbine, but also the connection means for connecting the starting turbine and straight-wing turbine during low-speed revolution and automatically disconnecting the turbines, thus disadvantageously complicating the structure of the wind turbine.

The electric power generating equipment disclosed in Patent Literature 4 has the electric circuit for switching the generator to the motor to start in a weak wind, consequently to increase power consumption disadvantageously for power generation when continuing the weak wind state.

The auxiliary motor in the wind power generator of Patent Literature 5 has a function of outputting rotating moment required for activating the vertical axis wind turbine, so that electric power can be generated by activating the vertical axis wind turbine even in the doldrums or in a slight wind by which the vertical axis wind turbine cannot stably rotate.

Thus, the proposed generator is likely to waste battery power when continuing the slight wind state for a long time, thus decreasing the life of the battery. If the wind turbine cannot start because the voltage of the battery has to be maintained, the state in which the wind turbine cannot rotate continues for a long time, thus inconveniently falling short of expectations of a user and losing the significance of the installation of the wind turbine.

The wind power generator disclosed in Patent Literature 5 necessitates the auxiliary motor and gear mechanism, thus disadvantageously making the device complicated and increasing noises.

In the light of existing circumstances as mentioned above, the present invention seeks to provide a vertical axis wind turbine and a wind turbine blade having self-starting performance in a slight wind of about 1 to 2 m/s without using a motor or starting power and having torque coefficient high enough to offer excellently stable performance inherent to the lift type wind turbine in a high wind velocity range.

### MEANS OF SOLVING THE PROBLEMS

To solve the problems described above according to the present invention, there is provided a vertical axis wind turbine featured by comprising a wind receiving plate having a wind receiving surface and an openable and closable pivot, which wind receiving plate is operated to close in the direction in which the centrifugal force is produced in proportion to the revolution of a blade generating a lifting power, and an energizing means for energizing an opening force to open the wind receiving plate to the wind receiving side.

The blade of the lift type wind turbine according to the present invention is featured by comprising a wind receiving plate having a wind receiving surface and an openable and closable pivot, which wind receiving plate is operated to close in the direction in which the centrifugal force is produced in proportion to the revolution of a blade generating a lifting power, and an energizing means for energizing an opening force to open the wind receiving plate to the wind receiving side.

The present invention is also featured by comprising a holding part or holding member for maintaining the wind receiving plate in a prescribed opening angle.

The present invention is also featured by comprising a wind receiving plate which opens in a lower circumferential velocity region than a prescribed circumferential velocity of the blade generating a lifting power and performs a closing operation in a circumferential velocity region not lower than the prescribed circumferential velocity.

The vertical axis wind turbine according to the present invention is also featured by comprising a wind receiving plate which opens at smaller revolution than a prescribed revolution of the blade generating a lifting power and performs a closing operation at a revolution not lower than the prescribed revolution.

The blade of the lift type wind turbine according to the present invention is also featured by comprising a wind receiving plate which opens at smaller revolution than a prescribed revolution of the blade generating a lifting power and performs a closing operation at a revolution not lower than the prescribed revolution.

The vertical axis wind turbine according to the present invention is also featured by comprising a wind receiving plate giving rise to an opening force by the action of an elastic body, actuator or gravity and a closing force in a region of revolution not lower than a prescribed revolution of the blade by the action of a centrifugal force caused by the revolution of the blade generating a lifting power.

The blade of the lift type wind turbine according to the present invention is also featured by comprising a wind receiving plate giving rise to an opening force by the action of an elastic body, actuator or gravity and a closing force in a region of revolution not lower than a prescribed revolution of the blade by the action of a centrifugal force caused by the revolution of the blade generating a lifting power.

The vertical axis wind turbine according to the present invention is also featured by comprising a wind receiving plate which opens at a primary wind velocity lower than a prescribed wind velocity and performs a closing operation at a wind velocity not lower than the prescribed wind velocity.

The vertical axis wind turbine according to the present invention is also featured by comprising a wind receiving plate which opens at a circumferential velocity ratio lower than a prescribed circumferential velocity ratio and performs a closing operation at a circumferential velocity ratio not lower than the prescribed circumferential velocity ratio.

### EFFECT OF THE INVENTION

According to the present invention, since the vertical axis wind turbine featured by comprising the wind receiving plate having the wind receiving surface and the openable and closable pivot, which wind receiving plate is operated to close in the direction in which the centrifugal force is produced in proportion to the revolution of the blade generating the lifting power, and the energizing means for energizing the opening force to open the wind receiving plate to the wind receiving side, the starting performance of the lift type wind turbine can be improved by means of the wind receiving plate, which opens at a low revolution of the blade so as to function as a drag type wind turbine, and automatically closes at a high revolution of the blade so as to function as a lift type wind turbine, consequently to switch between the drag type wind turbine and lift type wind turbine with a simple structure by the action of the structure of closing the wind receiving plate with the centrifugal force.

Also, according to the present invention, since the blade of the invention is provided with the wind receiving plate having the wind receiving surface and the openable and closable pivot, which wind receiving plate is operated to close in the direction in which the centrifugal force is produced in proportion to the revolution of the blade generating the lifting power, and the energizing means for energizing the opening force to open the wind receiving plate to the wind receiving side, the wind receiving plate having a large wind receiving area can be used, consequently to improve the starting performance of the lift type wind turbine.

Since the present invention uses the holding part or holding member for maintaining the wind receiving plate in a prescribed degree of opening, the opening angle of the wind receiving plate at the low revolution can be set at the prescribed opening angle.

Further, since the present invention uses the wind receiving plate which opens in a lower circumferential velocity region than a prescribed circumferential velocity of the blade generating a lifting power and performs a closing operation in a circumferential velocity region not lower than the prescribed circumferential velocity, the invention can automatically switch between the functions of the drag type wind turbine and the lift type wind turbine according to the circumferential velocity of the blade.

Further, since the present invention has the wind receiving plate which opens at smaller revolution than a prescribed revolution of the blade generating a lifting power and performs a closing operation at a revolution not lower than the prescribed revolution, the invention can automatically switch between the functions of the drag type wind turbine and the lift type wind turbine according to the revolution speed of the blade present at a prescribed radius position.

Further, since the vertical axis wind turbine of the present invention comprises the wind receiving plate which opens at a primary wind velocity lower than a prescribed wind velocity and performs a closing operation at a wind velocity not lower than the prescribed wind velocity, the invention can automatically switch between the functions of the drag type wind turbine and the lift type wind turbine according to the speed of the blade.

Further, since the vertical axis wind turbine of the present invention comprises the wind receiving plate which opens at a circumferential velocity ratio lower than a prescribed circumferential velocity ratio and performs a closing operation at a circumferential velocity ratio not lower than the prescribed circumferential velocity ratio by measuring the wind velocity and the revolution speed or circumferential velocity of the blade, the invention can automatically switch between the functions of the drag type wind turbine and the lift type wind turbine according to the circumferential velocity ratio.

### [BRIEF DESCRIPTION OF THE DRAWINGS]

[FIG. 1] Perspective view showing the appearance of the vertical axis wind turbine and wind turbine blade of the invention.
[FIG. 2] Sectional view showing the blade with an opening and closing mechanism for the wind receiving plate.
[FIG 3] Sectional view showing the blade with the wind receiving plate in the closed state.
[FIG. 4] Sectional view showing another embodiment of the blade with the opening and closing mechanism for the wind receiving plate.
[FIG. 5] Sectional view showing the blade with the wind receiving plate in the closed state.
[FIG 6] Sectional view showing still another embodiment of the blade having the opening and closing mechanism for the wind receiving plate and a holding mechanism with a link.
[FIG. 7] Sectional view showing yet another embodiment of the blade with the opening and closing mechanism for the wind receiving plate.
[FIG 8] Sectional view showing further embodiment of the blade with the opening and closing mechanism for the wind receiving plate.

### EXPLANATION OF REFERENCE NUMERALS

- 8: Pole
- 10: vertical axis wind turbine
- 12: Mount portion
- 14: Fixing shaft
- 16: Generator
- 18: Blade
- 20: Support arm
- 22: Outer sleeve
- 24: Torque transmission cap
- 26: Speed-up device
- 28: Coupling
- 30a, 30b, 30c: Bearings
- 36: Dust seal
- 40: Wind receiving plate
- 41: Wind receiving plate
- 42: openable and closable pivot
- 44: Spring
- 46: Holding part
- 48: Holding member
- 49: Holding member
- 50: Rod
- 52: Guide member
- 60: Solenoid
- 64: Spring
- 66: Hinge

### BEST MODE FOR CARRYING OUT THE INVENTION

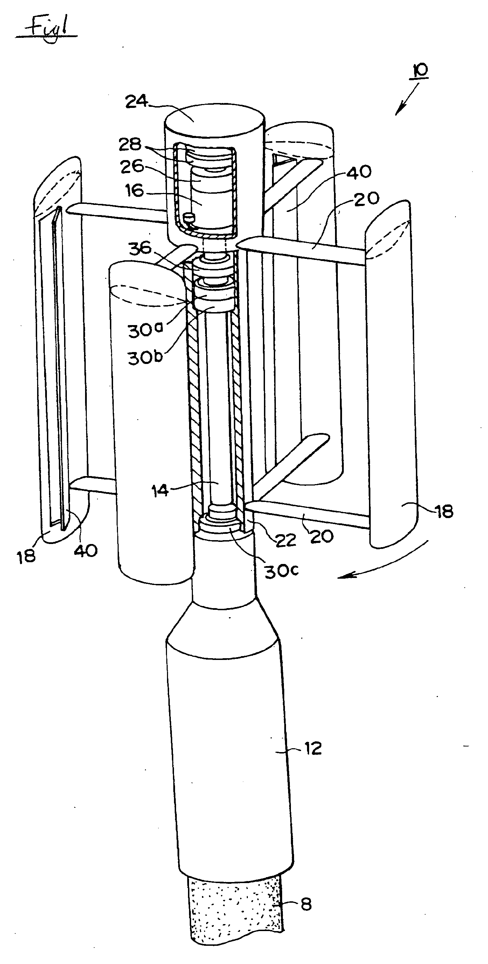

The vertical axis wind turbine and wind turbine blade according to the present invention will be described hereinafter. FIG 1 is a perspective view showing the appearance of the vertical axis wind turbine and wind turbine blade of the invention.
As shown in the drawing, the vertical axis wind turbine 10 comprises a mount portion 12 attached to an electric pole or other pole 8, a fixing shaft 14 fixed onto the mount portion 12, a generator 16 disposed on the top end of the fixing shaft 14, a blade 18 generating rotational torque by converting a wind velocity to lifting power, a support arm having a streamline section for supporting the blade at its upper and lower ends, an outer sleeve 22 attached to the support arm 20, and a torque transmission cap 24 for transmitting the rotational torque of the outer sleeve 22 to the generator 16.

In the illustrated embodiment, a speed-up device is mounted on the input shaft of the generator 16, so that the revolution of the outer sleeve is increased by the speed-up device 26 and transmitted to the input shaft of the generator 16. Between the torque transmission cap 24 and the speed-up device 26, there is disposed a coupling 28 having functions of transmitting the rotational torque of the outer sleeve22 to the speed-up device 26 and absorbing positional declination, inclination and variation therebetween. The coupling 28 may be made of an elastic body such as rubber and spring, a contact coupling such as an Oldham's coupling a lathe dog coupling, or a noncontact coupling using a magnet.

Between the fixing shaft 14 and the outer sleeve 22, there is disposed bearings 30a, 30b and 30c, and the fixing shaft 14 supports rotatably the outer sleeve 22. Angular bearings are used as the bearings 30a and 30b in the illustrated embodiment and arranged back to back so as to support a radial load and a thrust load, while the bearings should not be understood as being limited thereto. Alternatively, a conical bearing may be used, or a radial bearing and a thrust bearing may be used independently. Also in the illustrated embodiment, a ball bearing capable of support a radial load is used as the bearing 30c, while the invention is not to be considered limited to this bearing analogously.
Also in the illustrated embodiment, a dust seal is arranged above the bearing 30a to keep the bearing 30a free from dusts and water.

Onto the blade 18, there is attached a openable and closable and closable wind receiving plate 40 capable of opening during the low-speed revolution of the outer sleeve 22 or at the low circumferential velocity of the blade 18 so as to receive following wind on the back of the blade 18, consequently to rotate the outer sleeve 22 like a drag type wind turbine.

In the case of a lift type wind turbine, the lifting power generated by the blade 18 is weak at a low circumferential velocity ratio (e.g. when the circumferential velocity ratio (tip-speed ratio) of the outer sleeve 22 is not exceeding 1) at a low wind velocity, resulting in weak rotational torque of the outer sleeve, consequently to cause difficulty in starting the wind turbine. According to the present invention, since the wind receiving plate 40 having the wind receiving surface opens to receive following wind on the back of the blade 18 when the outer sleeve 22 rotates at a low speed or the blade 18 exists in a lower circumferential velocity region than a prescribed circumferential velocity of the blade, the wind turbine can easily start to rotate even at the low circumferential velocity of the blade 18.

Meanwhile, the lifting power generated by the blade 18 increases with increasing the circumferential velocity of the blade 18, the rotational torque of the outer sleeve 22 increases concurrently, whereas the blade 18 cannot gain the prescribed lifting power as well as remarkably increasing drag when the wind receiving plate 40 is maintained in its open state. Such being the case, the present invention makes it possible to increase production of electricity by increasing the lifting power and decreasing the drag of the blade 18 to increase the rotational torque of the wind turbine by means of an opening and closing mechanism to open the wind receiving plate 40 when the circumferential velocity of the blade 18 becomes not lower than the prescribed circumferential velocity with increase in revolution of the outer sleeve 22 and increase in centrifugal force with increasing the revolution of the outer sleeve 22, when a primary wind velocity increases, and when the circumferential velocity ratio of the blade 18 becomes not lower than the prescribed value.

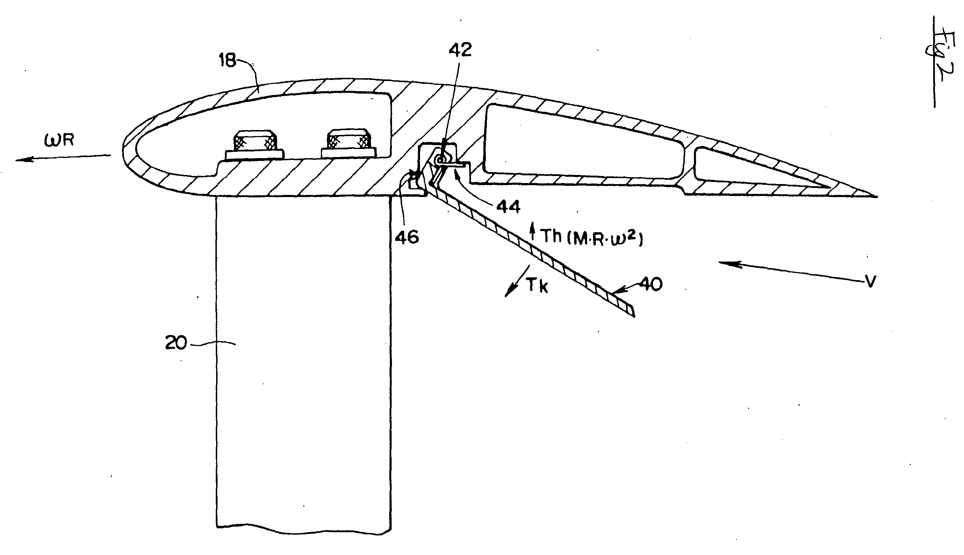

FIG 2 is a sectional view of the blade with the opening and closing mechanism for the wind receiving plate according to the present invention. In the illustrated embodiment, the blade 18 is provided on the wing lower surface with the wind receiving plate 40 having a wind receiving surface and an openable and closable pivot 42, so that the wind receiving plate 40 opens by force of a spring 44, which is a form of an energizing means. This mechanism functions to close the wind receiving plate 40 by causing a centrifugal force acting on the wind receiving plate 40 (centrifugal force generated according to the revolution of the blade 18 generating the lifting power) when the revolution of the outer sleeve 22 increases or when the circumferential velocity of the blade becomes not lower than the prescribed circumferential velocity.

It is optional to employ a structure to close the wind receiving plate by use of a control means issuing a controlling command to close the wind receiving plate 40 and an actuator operated following the controlling command issued from a control means when the primary wind velocity as measured by an anemometer or the like becomes higher than the prescribed wind velocity. Alternatively, the primary wind velocity may be measured by the anemometer or the like while measuring the revolution of the outer sleeve 22 or the circumferential velocity of the blade 18, so that the wind receiving plate may be closed by using the control means issuing a controlling command to close the wind receiving plate 40 by the actuator following the controlling command of the aforementioned control means.

As illustrated, the blade 18 secured by the support arm 20 has the openable and closable pivot 42 such as of a hinge or pin rotatably supporting the wind receiving plate 40, the spring 44 (hairpin spring in the illustrated embodiment) for energizing a force in the direction in which the wind receiving plate 40 opens, and a holding part 46 for maintaining the wind receiving plate in a prescribed opening angle.

In the illustrated embodiment, the pivot 42 uses the hinge or pin as one example, but the hairpin spring in itself may be used as the pivot, or even a plate spring or other elastic bearing may be used for attaining the object of the present invention.

In the illustrated embodiment, the hairpin spring 44 is used as the energizing means for energizing the opening force to open the wind receiving plate 40 to the wind receiving side, but the energizing means should not be understood as being limited to the hairpin spring and may be replaced with an elastic body such as a tension spring, a compression spring and a plate spring. Also, the material of the energizing means should not be understood as being limited to metal, it may be made of rubber, resin or other elastic body. The wind receiving plate 40 may be operated by being energized by the opening force produced by an actuator such as a voice coil motor or force of gravitation.

When the tip speed ωR of the blade 18 having a turning radius R is far higher than the wind velocity V by way of example, the revolution rate of the outer sleeve 22 is low to impart a small centrifugal force to the wind receiving plate 40, and the energizing force exerted to the wind receiving plate 40 in the opening direction by the spring 44. In this case, wince the wind velocity V is higher than the tip speed ωR of the blade 18, drag caused by the wind velocity V acts on the wind receiving plate 40, to generate a torque in the direction of accelerating the outer sleeve 22.

In order to generate a torque by the lifting power of the blade 18, the wind receiving plate 40 should be designed to close when the tip speed ωR of the blade 18 is increased with the wind velocity V and the tip speed ωR comes to the wind velocity V to decrease the torque constant of the drag. In the illustrated embodiment, the mass of the wind receiving plate 40 and the opening torque exerted by the spring 44 are designed so as to allow a closing torque Th with a centrifugal force (M×R×ω×ω) acting on the mass M of the wind receiving plate 40 to exceed the opening torque Tk with the spring 44 in the range in which the circumferential velocity of the blade 18 is over the prescribed wind velocity.

When the speeding-up of the outer sleeve 22 becomes worse due to a large revolution rate range bringing the wind receiving plate 40 into the half-open state, it is preferable to design so that the pivot 42 may have a friction resistance as small as possible and the spring 44 may have a small spring constant

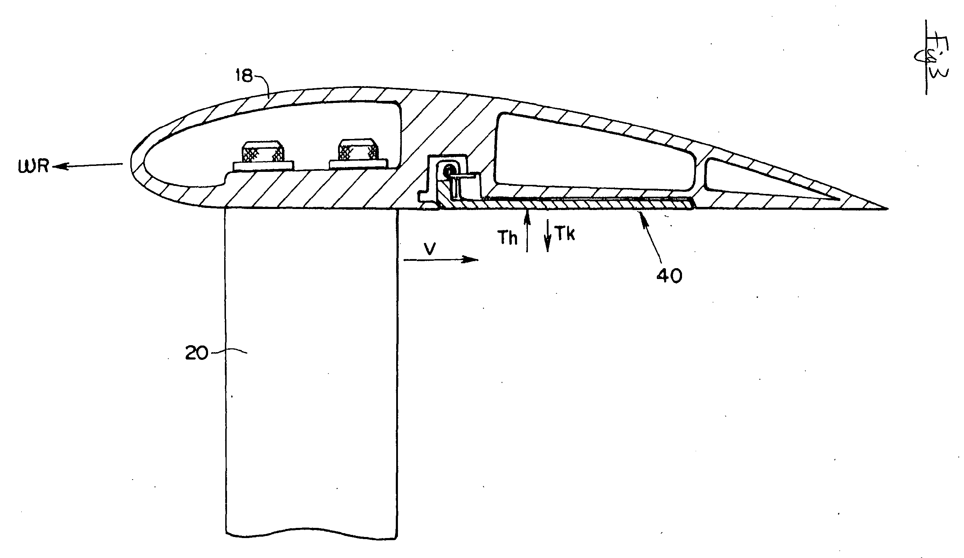

Furthermore, since the wind receiving plate 40 completely closes when the revolution rate of the outer sleeve 22 increases to increase the centrifugal force, the blade 18 returns to a normal wing shape, consequently to decrease the drag to the prescribed value and increase the lifting power to the prescribed value, as the result of which a torque for accelerating the outer sleeve 22. FIG 3 is a cross sectional view illustrating the blade 18 in the closed state of the wind receiving plate 40.

When the revolution rate of the outer sleeve 22 comes down as the wind velocity becomes smaller, the centrifugal force weakens to decrease the closing torque Th of the wind receiving plate 40. When the revolution rote of the outer sleeve 22 is further reduced to cause the opening torque Tk to exceed the closing torque Th, the wind receiving plate 40 again opens so as to function as a drag type wind turbine.

In the aforementioned embodiment, the wind receiving plate 40 is attached to the wing lower surface (on the side of the outer sleeve 22), but alternatively, the wind receiving plate may be arranged on the wing upper surface, so that the wind receiving plate 40 can be closed by exerting the centrifugal force by means of a pivot or link mechanism.
Further, the wind receiving plate 40 may be formed on the entire surface of the blade 18, only on the side of the wing edge, or only on the central portion of the blade 18.

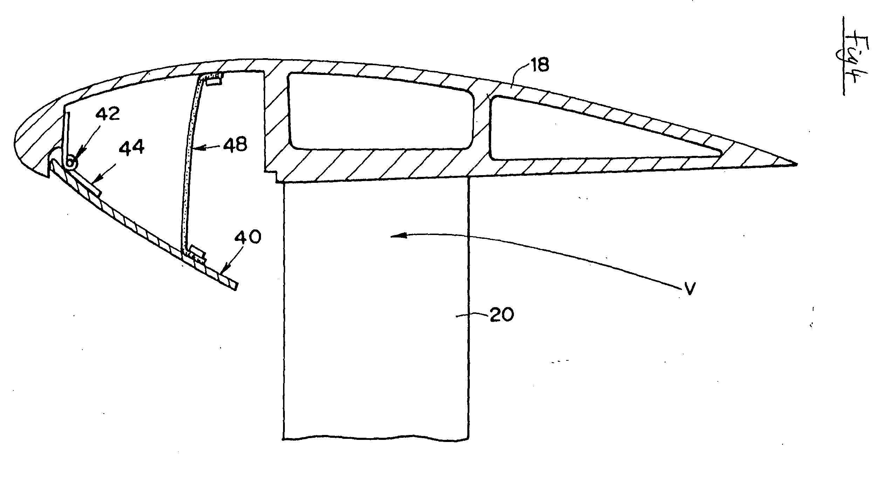

FIG 4 is a sectional view showing the other embodiment of the blade having an opening and closing mechanism for the wind receiving plate. In the illustrated embodiment, there is disposed an openable and closable wind receiving plate 40 in the vicinity of the front end of the wing lower surface of the blade 18. The wind receiving plate 40 as illustrated is in its open state with the force of the spring 44 when the revolution rate of the outer sleeve 22 is low. The wind receiving plate 40 has a structure for being closed with the centrifugal force acting on the wind receiving plate 40, which becomes higher than the energizing force of the spring 44 in the cases that the revolution of the outer sleeve 22 increases, that the circumferential velocity of the blade 18 exceeds the prescribed circumferential velocity, that the circumferential velocity ratio exceeds the prescribed value, or that the primary wind velocity of wind exceeds the prescribed the wind velocity, for instance.

In the illustrated embodiment, the structure for determining the opening angle of the wind receiving plate 40 is provided with a holding member 48. The holding member 48 may be of wire, chain, rubber or spring.

In the illustrated embodiment, since the wind receiving plate 40 is disposed near the front end of the blade 18, the wind flowing along the lower surface of the blade 18 possibly increases to hit the wind receiving plate 40 when the wind blows from the lower backside of the blade 18 in the low revolution of the blade 18, so that improvement in torque constant can be expected.

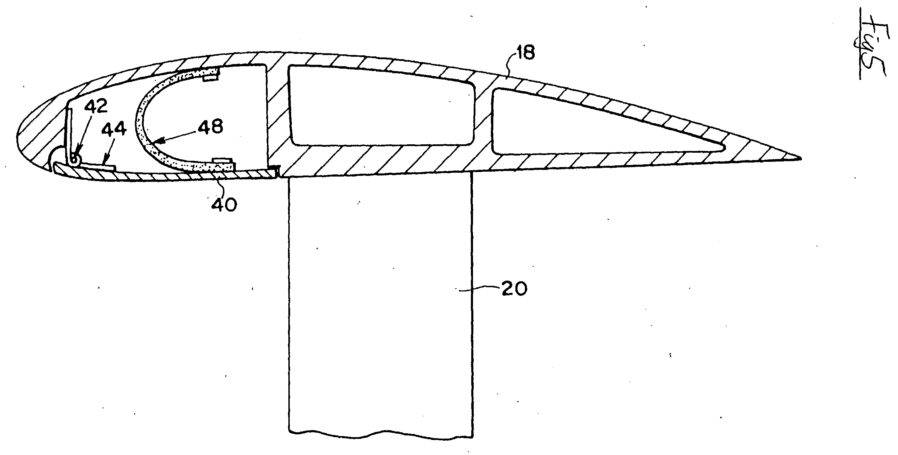

FIG 5 is a sectional view showing the blade in the close state of the wind receiving plate.
When the centrifugal force increases with increasing the revolution rate of the outer sleeve 22, the wind receiving plate 40 closes to allow the blade 18 to turn to its normal wing shape, consequently to produce a torque for accelerating the outer sleeve 22 with decreasing the prescribed drag and producing the prescribed lifting power.

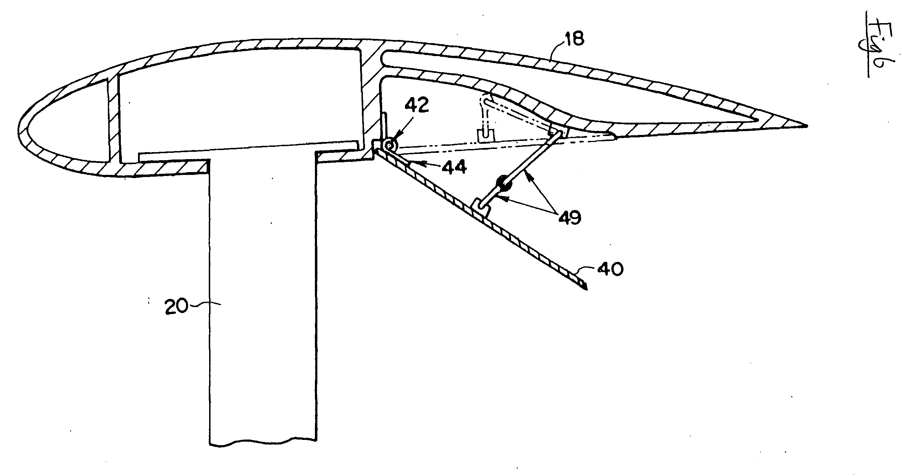

FIG 6 is a sectional view showing the other embodiment of the blade having an opening and closing mechanism and a holding mechanism using a link. In the illustrated embodiment, there is formed a space in the inner side of the portion in which the wind receiving plate 40 of the blade 18 exists, wherein the holding member 49 using the link is disposed in the space so as to determine the opening angle of the wind receiving plate 40.

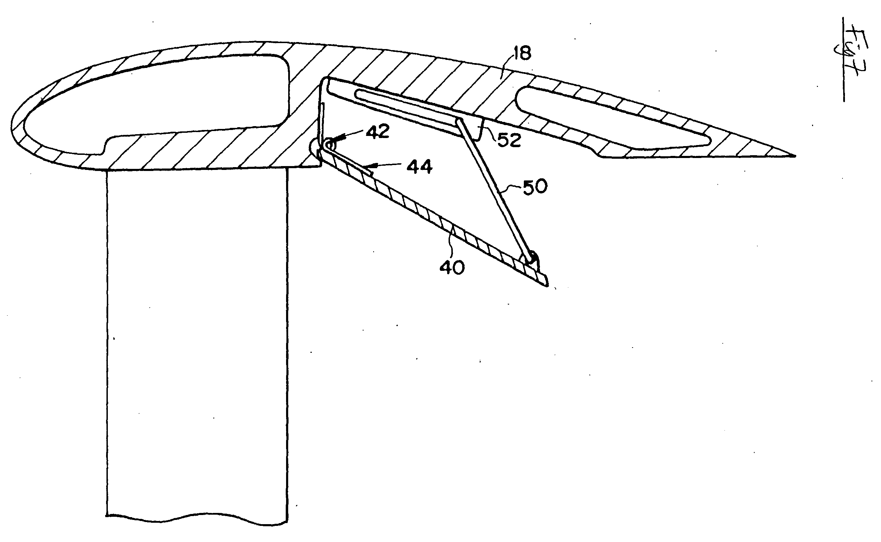

FIG 7 is a sectional view showing the other embodiment of the blade having an opening and closing mechanism. In the illustrated embodiment, there is formed a space in the inner side of the portion in which the wind receiving plate 40 of the blade 18 exists, wherein the holding member comprising a rod 50 and a guide member 52 so as to determine the opening angle of the wind receiving plate 40.

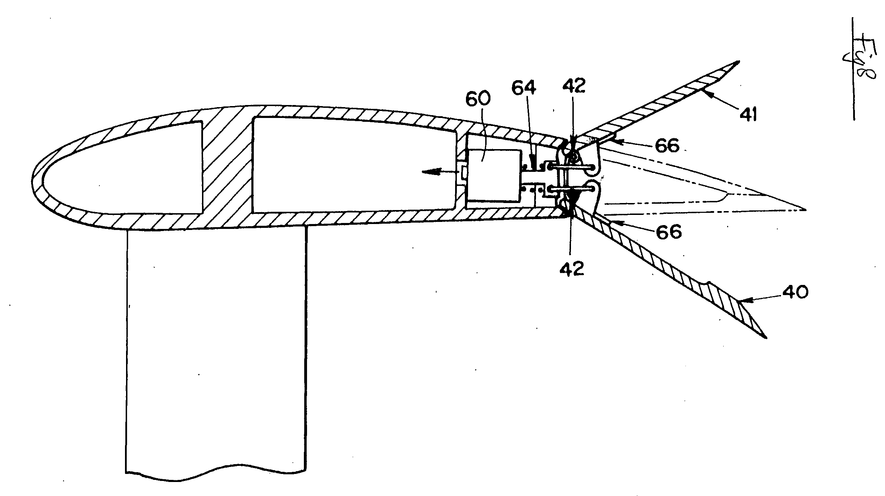

FIG 8 is a sectional view showing the other embodiment of the blade having an opening and closing mechanism. In the illustrated embodiment, the wind receiving plates 40 and 41 are disposed at the rear edge of the blade 18 so as to open the wind receiving plates 40 and 41 around a pivot 42 by the force of a compression spring 64.

For example, a solenoid 60 is supplied with electricity by a control means (not shown) to switch from the drag type wind turbine to the lift type wind turbine in the cases where the revolution of the outer sleeve 22 increase, the circumferential velocity of the blade exceeds the prescribed circumferential velocity, the primary wind velocity increases, or the circumferential velocity ratio is over the prescribed value.

The shaft of the solenoid 60 moves leftward in FIG 8 against the force of the spring 64 to produce a rotating force in the direction in which the wind receiving plates 40 and 41 connected thereto through the link rotate to close. The actuator for imparting a force to close the wind receiving plates 40 and 41 should not be understood as being limited to the aforementioned solenoid, but may be of an air cylinder or the like. The illustrated embodiment has hinges 66 for rotatably support the wind receiving plates 40 and 41.

The embodiment described above employs a mechanism having the wind receiving plates 40 and 41 mounted on the blade 18, but the present invention does not impose any limitation on the openable and closable wind receiving plates 40 and 41 mounted on the blade 18. They may be attached to the support arm 20 or the other rotating portion.

### INDUSTRIAL APPLICABILITY

According to the vertical axis wind turbine and wind turbine blade according to the present invention, since the wind receiving plate opens at a low revolution of the blade to function as a drag type wind turbine, the starting performance of the wind turbine can be improved, and the wind receiving plate automatically closes at a high revolution of the blade to function as a lift type wind turbine.

Further, since the present invention has the structure capable of closing the wind receiving plate by utilizing the centrifugal force, the drag type wind turbine and lift type wind turbine can be switched with the simple structure. Thus, the wind turbine can start rotating by the force of wind without any other power source for starting the wind turbine, and the rotary sleeve can rotate at a good lift-to-drag ratio intrinsic for the blade having a wing-shape section at the high circumferential velocity of the blade.

Furthermore, the present invention can provide the vertical axis wind turbine and wind turbine blade, which each have a simple structure and are low in price.

Furthermore, the present invention can provide the vertical axis wind turbine, which is good in torque constant and can generate a wealth of electricity.

## Claims

1. A vertical axis wind turbine featured by comprising a wind receiving plate having a wind receiving surface and an openable and closable pivot, which wind receiving plate is operated to close in the direction in which the centrifugal force is produced in proportion to the revolution of a blade generating a lifting power, and
an energizing means for energizing an opening force to open said wind receiving plate to the wind receiving side.

2. A wind turbine blade featured by comprising a wind receiving plate having a wind receiving surface and an openable and closable pivot, which wind receiving plate is operated to close in the direction in which the centrifugal force is produced in proportion to the revolution of the blade generating a lifting power, and
an energizing means for energizing an opening force to open said wind receiving plate to the wind receiving side.

3. A vertical axis wind turbine featured by comprising a wind receiving plate having a wind receiving surface and an openable and closable pivot, which wind receiving plate is operated to close in the direction in which the centrifugal force is produced in proportion to the revolution of the blade generating a lifting power,
an energizing means for energizing an opening force to open said wind receiving plate to the wind receiving side, and
a holding part or holding member for maintaining said wind receiving plate in a prescribed opening angle.

4. A wind turbine blade featured by comprising a wind receiving plate having a wind receiving surface and an openable and closable pivot, which wind receiving plate is operated to close in the direction in which the centrifugal force is produced in proportion to the revolution of the blade generating a lifting power,
an energizing means for energizing an opening force to open said wind receiving plate to the wind receiving side, and
a holding part or holding member for maintaining said wind receiving plate in a prescribed opening angle.

5. A vertical axis wind turbine featured by comprising a wind receiving plate which opens in a lower circumferential velocity region than a prescribed circumferential velocity of the blade generating a lifting power and performs a closing operation in a circumferential velocity region not lower than the prescribed circumferential velocity.

6. A wind turbine blade featured by comprising a wind receiving plate which opens in a lower circumferential velocity region than a prescribed circumferential velocity of the blade generating a lifting power and performs a closing operation in a circumferential velocity region not lower than the prescribed circumferential velocity.

7. A vertical axis wind turbine featured by comprising a wind receiving plate which opens at smaller revolution than a prescribed revolution of the blade generating a lifting power and performs a closing operation at a revolution not lower than the prescribed revolution.

8. A wind turbine blade featured by comprising a wind receiving plate which opens at smaller revolution than a prescribed revolution of the blade generating a lifting power and performs a closing operation at a revolution not lower than the prescribed revolution.

9. A vertical axis wind turbine featured by comprising a wind receiving plate giving rise to an opening force by the action of an elastic body, actuator or gravity and a closing force in a region of revolution not lower than a prescribed revolution of the blade by the action of a centrifugal force caused by the revolution of the blade generating a lifting power.

10. A wind turbine blade featured by comprising a wind receiving plate giving rise to an opening force by the action of an elastic body, actuator or gravity and a closing force in a region of revolution not lower than a prescribed revolution of the blade by the action of a centrifugal force caused by the revolution of the blade generating a lifting power.

11. A vertical axis wind turbine featured by comprising a wind receiving plate which opens at a primary wind velocity lower than a prescribed wind velocity and performs a closing operation at a wind velocity not lower than the prescribed wind velocity.

12. A wind turbine blade featured by comprising a wind receiving plate which opens at a primary wind velocity lower than a prescribed wind velocity and performs a closing operation at a wind velocity not lower than the prescribed wind velocity.

13. A vertical axis wind turbine featured by comprising a wind receiving plate which opens at a circumferential velocity ratio lower than a prescribed circumferential velocity ratio and performs a closing operation at a circumferential velocity ratio not lower than the prescribed circumferential velocity ratio.

14. A vertical axis wind turbine featured by comprising a wind receiving plate which opens at a circumferential velocity ratio lower than a prescribed circumferential velocity ratio and performs a closing operation at a circumferential velocity ratio not lower than the prescribed circumferential velocity ratio.

## Amended claims

### Amended claims under Art. 19.1 PCT

1. Amended). A vertical axis wind turbine featured by comprising a wind receiving plate having a wind receiving surface and an openable and closable pivot and disposed near the front end of a blade, which wind receiving plate is operated to close in the direction in which the centrifugal force is produced in proportion to the revolution of the blade generating a lifting power, and
an energizing means for energizing an opening force to open said wind receiving plate to the wind receiving side.

2. Amended). A wind turbine blade featured by comprising a wind receiving plate having a wind receiving surface and an openable and closable pivot and disposed near the front end of a blade, which wind receiving plate is operated to close in the direction in which the centrifugal force is produced in proportion to the revolution of the blade generating a lifting power, and
an energizing means for energizing an opening force to open said wind receiving plate to the wind receiving side.

3. Amended). A vertical axis wind turbine featured by comprising a wind receiving plate having a wind receiving surface and an openable and closable pivot and disposed near the front end of a blade, which wind receiving plate is operated to close in the direction in which the centrifugal force is produced in proportion to the revolution of the blade generating a lifting power,
an energizing means for energizing an opening force to open said wind receiving plate to the wind receiving side, and
a holding part or holding member for maintaining said wind receiving plate in a prescribed opening angle.

4. Amended). A wind turbine blade featured by comprising a wind receiving plate having a wind receiving surface and an openable and closable pivot and disposed near the front end of a blade, which wind receiving plate is operated to close in the direction in which the centrifugal force is produced in proportion to the revolution of the blade generating a lifting power,
an energizing means for energizing an opening force to open said wind receiving plate to the wind receiving side, and
a holding part or holding member for maintaining said wind receiving plate in a prescribed opening angle.

5. Amended). A vertical axis wind turbine featured by comprising a wind receiving plate disposed in an cutout made partially in the wing-shaped surface of a blade as a substitute for the wing portion thus cut out,
an actuator for opening and closing said wind receiving plate, and
a control means for controlling the opening and closing operation of said wind receiving plate through said actuator.

6. Amended). The vertical axis wind turbine set forth in claim 5, featured by further comprising wind speed measuring means for measuring a primary wind velocity, so that the opening and closing operation of said wind receiving plate is controlled in accordance with the wind velocity value measured by said wind speed measuring means so as to open said wind receiving plate at a primary wind velocity lower than a prescribed wind velocity and close said wind receiving plate at a wind velocity not lower than the prescribed wind velocity.

7. Amended). The vertical axis wind turbine set forth in claim 5, featured by further comprising revolution measuring means for measuring the revolution of the wind turbine, so that the opening and closing operation of said wind receiving plate is controlled in accordance with the revolution measured by said revolution measuring means so as to open said wind receiving plate at a primary revolution lower than a prescribed revolution and close said wind receiving plate at a revolution not lower than the prescribed revolution.

8. Amended). The vertical axis wind turbine set forth in claim 7, featured in that said control means calculates the circumferential velocity of the blade from the revolution measured by said revolution measuring means so as to open said wind receiving plate at a primary revolution lower than a prescribed revolution and close said wind receiving plate at a revolution not lower than the prescribed revolution.

9. Amended). The vertical axis wind turbine set forth in claim 5, featured by further comprising wind speed measuring means for measuring a primary wind velocity and revolution measuring means for measuring the revolution of the wind turbine, wherein said control means calculates the circumferential velocity of the blade from the revolution measured by said revolution measuring means so as to open said wind receiving plate when a circumferential velocity ratio of the measured wind velocity and the circumferential velocity of the blade is lower than a prescribed circumferential velocity ratio and close the wind receiving plate when the circumferential velocity ratio not lower than the prescribed circumferential velocity ratio.

Statement under Art. 19.1 PCT
Claims 1 to 4 are amended to include the limitation "disposed near the front end of a blade". The amendments to these claims are based on the descriptions of Paragraphs [0061] and [0063] on Page 12 of the specification on file and FIGS. 4 and 5.

The amendments to Claims 5 to 9 are based on the former claims originally filed. The amendments should be supported by the descriptions of Paragraph [0051] on Page 11 of the specification on file and FIG 8.

The reference cited in the PCT Written Opinion is related to auxiliary wings attached to wind turbine blades, but makes no mention of "wind receiving plate disposed near the front end of a blade", and "structure comprising an actuator for opening and closing the wind receiving plate, and a control means for controlling the opening and closing operation of the wind receiving plate through the actuator."

As is apparent from the above, it is believed that the invention set forth in the newly amended claims has novelty and an inventive step over all of the cited references.
